# FASCICULE DE BREVET EUROPEEN

(11) **EP 3 268 239 B1**
(45) Date de publication et mention de la délivrance du brevet: **12.08.2020**
(21) Numéro de dépôt: 16705072.3
(22) Date de dépôt: 09.02.2016
(51) Int. Cl.: B60H 1/00

(54) **CIRCUITS DE CLIMATISATION POUR VEHICULE AUTOMOBILE**
KLIMATISIERUNGSKREISLÄUFE FÜR EIN KRAFTFAHRZEUG
AIR-CONDITIONING CIRCUITS FOR A MOTOR VEHICLE

(30) Priorité: 10.03.2015 FR 1551970
(43) Date de publication de la demande: 17.01.2018
(73) Titulaire: Valeo Systemes Thermiques, 78320 Le Mesnil Saint Denis (FR)
(72) Inventeur: BARBIER, Thierry, 78322 Le Mesnil Saint-Denis Cedex (FR); TIERCE, Simon, 78322 Le Mesnil Saint-Denis Cedex (FR); PERNET, Stéphane, 78322 Le Mesnil Saint-Denis Cedex (FR)
(74) Mandataire: Tran, Chi-Hai
(86) Numéro de dépôt international: PCT/EP2016/052719
(87) Numéro de publication internationale: WO 2016/142115

(56) Documents cités:
- EP-A1- 0 812 714
- EP-A1- 1 407 903
- EP-A1- 2 634 022
- WO-A1-01/62530
- WO-A1-2015/012286
- JP-A- S5 695 716
- US-A1- 2008 200 110

## Description

La présente invention se rapporte aux circuits de climatisation pour véhicule automobile.

Plus particulièrement, l'invention concerne une installation de chauffage, ventilation et/ou climatisation pour un habitacle de véhicule automobile permettant le contrôle de la température de flux d'air dans une plusieurs zones de l'habitacle d'un véhicule automobile.

### ARRIÈRE-PLAN DE L'INVENTION

Un véhicule automobile est couramment équipé d'une installation de chauffage, de ventilation et/ou de climatisation qui est destinée à réguler les paramètres aérothermiques de l'air distribué dans l'habitacle, en particulier la température idéale de l'air délivré par l'installation à l'intérieur de l'habitacle.

Dans sa généralité, l'installation comprend un boîtier délimité par des cloisons à travers lesquels sont ménagés une entrée d'air et des sorties d'air.

Le document EP 0 812 714 A1 décrit une installation de chauffage, ventilation et/ou climatisation d'un type connu.

De façon connue en soi, le boîtier contient un organe pulseur apte à faire circuler un flux d'air dans le boîtier entre l'orifice d'entrée et les orifices de sortie. L'installation comporte en outre des organes de distribution agencés pour répartir le flux d'air entre les orifices de sortie en fonction du programme de ventilation et/ou climatisation souhaité par l'utilisateur. En particulier l'installation comporte généralement des moyens de traitement thermique comprenant d'une part un évaporateur pour refroidir et déshumidifier l'air le traversant et d'autre part un radiateur pour chauffer l'air le traversant. Les mêmes orifices de sortie sont amenés à être alimentés en air froid ou en air chaud en fonction de la position des organes de distribution. Dans les installations existantes, les organes de distribution sont généralement des volets plans montés pour tourner autour d'un axe. Cette structure des organes de distribution pose un problème lorsque un flux d'air chaud, par exemple un flux d'air de dégivrage, doit traverser un conduit d'entrée d'air froid pour atteindre l'ouverture de distribution souhaitée. Dans ce cas il est en effet nécessaire d'associer des éléments de paroi fixes au volet de distribution mais ces éléments de paroi fixes provoquent des pertes de charges importantes qui sont incompatibles avec la fourniture d'un débit d'air satisfaisant tout en limitant le bruit résultant de ce débit.

### OBJET DE L'INVENTION

Un but de l'invention est de proposer une installation de chauffage, ventilation et/ou climatisation d'un habitacle de véhicule automobile permettant d'assurer une distribution satisfaisante des flux d'air à différentes températures tout en minimisant la perte de charge dans les différents conduits.

### BRÈVE DESCRIPTION DE L'INVENTION

En vue de la réalisation de ce but, on propose selon l'invention une installation de chauffage, ventilation et/ou climatisation d'un habitacle de véhicule automobile, comprenant un boitier contenant un organe pulseur apte à faire circuler un flux d'air dans le boitier, entre un orifice d'entrée et des orifices de sortie, en passant par un conduit d'entrée d'air froid et/ou un conduit d'entrée d'air chaud séparés l'un de l'autre, l'installation comportant en outre des organes de distribution mobiles agencés pour répartir le flux d'air entre les orifices de sortie, au moins un organe de distribution intermédiaire étant agencé pour former un tronçon de conduit de distribution intermédiaire traversant l'un des conduits d'entrée et débouchant d'une part dans l'autre conduit d'entrée, et d'autre part dans un tronçon de conduit de sortie, pour au moins une position de l'organe de distribution intermédiaire.

Ainsi, la mise en coïncidence du tronçon de conduit intermédiaire porté par l'organe de distribution intermédiaire et du tronçon de conduit de sortie porté par le boîtier assure un guidage positif du flux d'air concerné avec un minimum de perte de charge.

Selon l'invention, l'organe de distribution intermédiaire est apte à acheminer l'air issu d'un organe de réfrigération ou de chauffage directement vers un des orifices de sortie.

Selon un mode de réalisation particulier, l'organe de distribution prolonge la continuité du tronçon de conduit de distribution intermédiaire.

Selon une version avantageuse de l'invention, l'organe de distribution intermédiaire est agencé pour former au moins deux tronçons de conduit intermédiaires accolés l'un à l'autre et montés pour pivoter sur un axe commun. On assure ainsi une meilleure rigidité de l'organe de distribution intermédiaire, ce qui minimise le risque de mise en vibration de l'organe de distribution intermédiaire.

Selon un mode de réalisation particulier, l'organe de distribution intermédiaire comporte plusieurs zones séparées par une cloison, et comprenant chacune au moins un tronçon de conduit de distribution intermédiaire mobile de façon indépendante des tronçons de conduits intermédiaires des autres zones. Il est ainsi possible de programmer à volonté la répartition de la ventilation et/ou la climatisation.

Selon un mode de réalisation encore plus particulier de l'invention, l'organe de distribution intermédiaire est agencé pour présenter un jeu avec ledit l'un des conduits d'entrée, et ledit l'un des conduits d'entrée comporte un organe de distribution mobile entre une position dans laquelle il obture ledit l'un des conduits d'entrée, et une position dans laquelle il laisse passer de l'air dans ledit l'un des conduits d'entrée.

Selon un autre aspect de l'invention, l'organe de distribution intermédiaire est monté dans le conduit d'entrée d'air froid et est mobile entre une position dans laquelle il s'étend en travers du conduit d'entrée d'air froid, et une position dans laquelle il s'étend selon une direction axiale du conduit d'entrée d'air froid. De préférence, dans la position dans laquelle l'organe de distribution intermédiaire s'étend en travers du conduit d'entrée d'air froid, il débouche sur une partie seulement du conduit d'air chaud. Il est ainsi possible d'alimenter simultanément deux orifices de sortie distincts en air chaud.

Selon un mode de réalisation préféré de l'invention, l'installation comporte un organe de réfrigération monté dans un conduit de réfrigération en parallèle au conduit d'entrée d'air froid, et un organe de distribution monté mobile dans le conduit de réfrigération entre une position dans laquelle il s'étend en travers du conduit de réfrigération, et une position dans laquelle il s'étend selon une direction axiale du conduit de réfrigération.

### BRÈVE DESCRIPTION DES DESSINS

D'autres caractéristiques et avantages de l'invention apparaîtront encore à la lecture de la description qui suit d'un mode de réalisation préféré non limitatif de l'invention en référence aux figures ci-jointes parmi lesquelles:
- La figure 1 est une vue en perspective schématique partielle d'une installation selon l'invention, vu selon la direction I de la figure 2,
- La figure 2 est une vue en coupe selon le plan II-II de la figure 1, à une échelle réduite et dans la position pour laquelle l'organe de distribution intermédiaire s'étend en travers du conduit d'entrée d'air froid,
- La figure 3 est une vue analogue à celle de la figure 2 pour une position de l'organe de distribution intermédiaire selon une direction axiale du conduit d'entrée d'air froid.
- La figure 4 est une vue analogue à celle de la figure 3 dans une position pour laquelle l'organe de distribution intermédiaire s'étend en travers du conduit d'entrée d'air froid, et un organe de distribution d'air froid est partiellement ouvert.

### DESCRIPTION DETAILLÉE DE L'INVENTION

En référence aux figures, l'installation de chauffage, ventilation et/ou climatisation d'un habitacle de véhicule automobile, comprend un boîtier 1 contenant un organe pulseur 2 apte à faire circuler un flux d'air dans le boîtier entre un orifice d'entrée 3 et des orifices de sortie, ici un orifice de dégivrage se décomposant en un orifice de dégivrage central 4.1, et des orifices de dégivrage latéraux 4.2 et 4.3 ; et un orifice de ventilation de l'habitacle 5 .

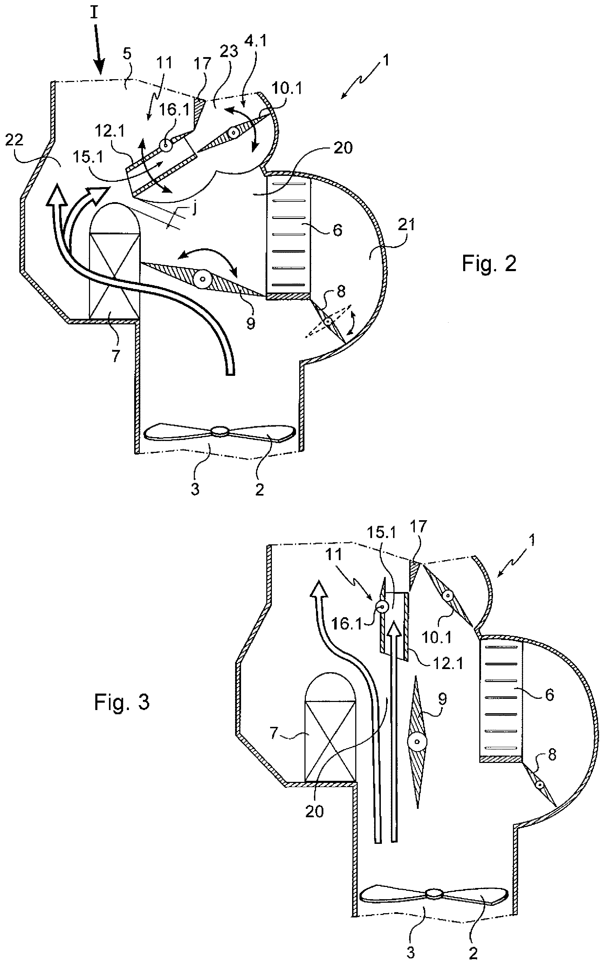

L'installation comporte en outre un organe de réfrigération 6, un évaporateur par exemple, et un organe du chauffage 7, un radiateur par exemple, associés à des organes de distribution, ici des volets 8, 9, et 10 associés à des organes de commande, non représentés, pour mettre les organes de distribution dans une position appropriée en fonction du programme de climatisation souhaitée par l'utilisateur. L'organe de réfrigération 6 est monté dans un conduit de réfrigération 21 en parallèle au conduit d'entrée d'air froid 20, et un organe de distribution 8 est monté mobile dans le conduit de réfrigération entre une position dans laquelle il s'étend en travers du conduit de réfrigération, et une position dans laquelle il s'étend selon une direction axiale du conduit de réfrigération, comme illustré en trait continu et en pointillés sur la figure 2.

L'installation comporte en outre un organe de distribution intermédiaire 11 agencé pour former des tronçons de conduit intermédiaires mobiles à l'intérieur du boitier. Dans le mode de réalisation illustré, l'organe de distribution intermédiaire est destiné à répartir l'air de dégivrage dans trois zones différentes, à savoir une zone centrale correspondant à l'orifice de sortie 4.1, et deux zones latérales correspondant aux orifices de sortie 4.2 et 4.3.

Dans la zone centrale, l'organe de distribution intermédiaire comporte deux tronçons de conduits intermédiaires 15.1 accolés l'un à l'autre et montés pour pivoter sur un axe commun 16.1. Chaque tronçon de conduit intermédiaire 15.1 comporte un segment de volet plan 12.1 auquel est associé un élément complémentaire en forme de U 13.1 ayant des ailes fixées aux segments de volets 12.1. Dans ce mode de réalisation, les éléments complémentaires 13.1 sont réalisés en une seule pièce avec les segments de volets 12.1 pour former des tronçons de conduit 15.1 fixés perpendiculairement à l'axe 16.1 pour pivoter avec celui-ci lors d'une commande en rotation au moyen d'un organe de commande connu en soi, ici un pignon 18.1.

Dans la suite de la description, les éléments ayant la même fonction dans les différentes zones seront désignés par la même référence racine, par exemple les tronçons de conduits intermédiaires 15 et seront distingués selon la zone par la référence secondaire 1, 2 ou 3.

Dans les zones 2 et 3 l'organe de distribution intermédiaire comprend un seul tronçon de conduit intermédiaire 15.2, 15.3,respectivement fixé à un axe tubulaire 16.2,16.3, porté par l'axe 16.1 et équipé d'un pignon de commande 18.2,18.3. Les trois zones sont séparées par des cloisons 19 s'étendant perpendiculairement aux axes 16.

Les tronçons de conduits intermédiaires 15.2, respectivement 15.3 comprennent un segment de volet 12.2, 12.3 auquel est fixé un élément complémentaire en U 13.2,13.3.

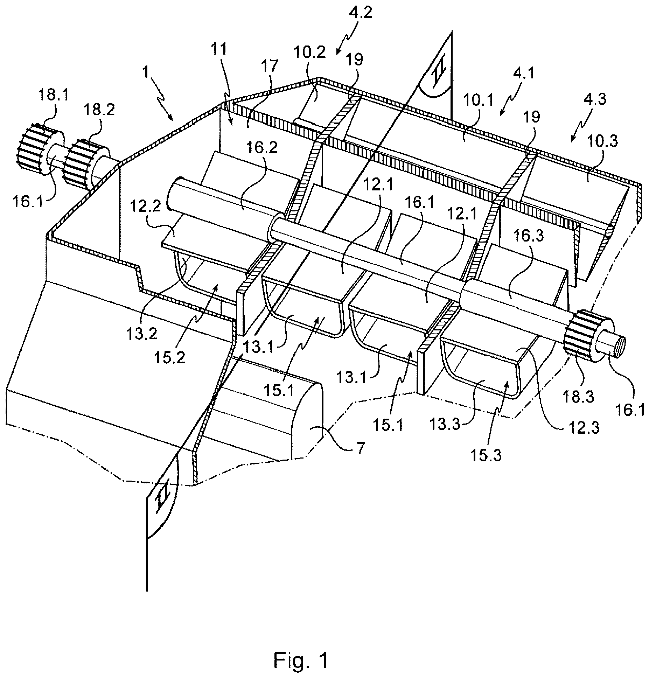

Sur les figures 1 et 2, l'installation est représentée dans une position de dégivrage et de ventilation chaude de l'habitacle. Dans cette position, l'organe de distribution 9 obture le conduit d'entrée d'air froid 20. L'organe de distribution intermédiaire 11 s'étend en travers du conduit d'entrée d'air froid 20, un bord des segments de volet 12 étant en appui contre une cloison 17 qui sépare les orifices de dégivrage 4 de l'orifice de ventilation 5, tandis que la semelle des éléments complémentaires 13 prend appui sur un bord en regard de l'organe de distribution 10 également divisé en trois parties chacune commandée en synchronisme avec la portion de conduit 15 correspondante. Ainsi, les tronçons de conduits de distribution intermédiaires débouchent dans des tronçons de conduits de sortie 23. L'extrémité opposée des tronçons de conduit 15 s'étend à l'aplomb de l'organe de chauffage 7 et débouche dans le conduit d'entrée d'air chaud 22 de sorte que le flux d'air chaud sortant du conduit d'air chaud 22 est canalisé vers les orifices de dégivrage 4. De plus, selon l'invention, l'organe de distribution 10 prolonge la continuité du conduit 15 formé par l'organe de distribution intermédiaire 11. En d'autres termes, l'organe de distribution 10 prolonge la continuité de la paroi 13 de l'organe de distribution intermédiaire 11. De cette manière, comme illustré sur la figure 2, l'organe de distribution intermédiaire 11 combiné avec l'organe de distribution 10 et la cloison 17 forment un conduit acheminant exclusivement l'air issu de l'organe de chauffage 7 directement à l'orifice de dégivrage 4 sans interférence de l'air froid puisque l'organe de distribution 10 bloque le passage de l'air froid vers l'orifice de dégivrage 4. Pour garantir que la combinaison de l'organe de distribution 10 et l'organe de distribution intermédiaire 11 forment un conduit pour l'air chaud, un mécanisme de synchronisation entre lesdits organes 10,11 est agencé dans l'installation de chauffage, ventilation et/ou climatisation. Ce mécanisme de synchronisation non illustré, peut par exemple correspondre à une bielle entre les deux organes ou encore à une came avec deux pions et chemins.

Dans le mode de réalisation particulier décrit, les tronçons de conduit 15 débouchent sur une partie seulement du conduit d'air chaud de sorte que l'orifice de ventilation 5 est également alimenté en air chaud. Ainsi que cela est noté sur la figure 2, l'organe de distribution intermédiaire 11 est agencé pour présenter un jeu j avec le conduit d'entrée d'air froid.

Selon un mode de réalisation non illustré, l'air issu de l'organe de réfrigération 6, déshydraté, est acheminé vers l'organe de chauffage 7. De cette manière, un flux d'air sec et chaud sera orienté en direction de l'orifice de dégivrage 4 par l'intermédiaire du conduit 15, et ce, sans interférence du flux d'air froid, favorisant ainsi le dégivrage du pare-brise.

La figure 3 illustre une position correspondant à une ventilation d'air froid. Le volet 9 s'étend axialement dans le conduit d'entrée d'air froid 20. Les volets 10 sont dans une position fermant l'accès aux orifices de dégivrage 4, et l'organe de distribution intermédiaire 11 a été positionné pour que les tronçons de conduit 15 s'étendent de façon axiale dans le conduit d'entrée d'air froid 20. Cette position assure un écoulement du flux d'air froid avec une perte de charge minimale.

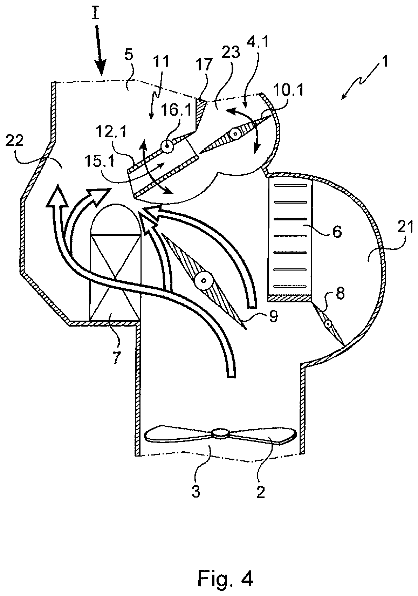

La figure 4 illustre l'installation dans une position pour laquelle on recherche un dégivrage chaud tout en modérant la température dans l'habitacle. A cet effet, l'organe de distribution intermédiaire 11 est donc dans la même position que sur la figure 2, mais le volet 9 est partiellement ouvert de sorte que l'air froid peut s'écouler par le jeu j et vient donc tempérer le flux d'air s'écoulant vers l'orifice de sortie 5.

Bien entendu l'invention n'est pas limitée au mode de réalisation décrit et est susceptible de variantes de réalisation dans le cadre de l'invention telle que définie par les revendications.

En particulier, bien que l'invention ait été décrite en relation avec un organe de distribution intermédiaire 11 comportant des tronçons de conduit agencés selon trois zones indépendantes, on peut mettre en œuvre l'invention dans une installation comportant seulement deux zones, par exemple en regroupant les ouvertures latérales selon une seule zone, voire même une seule zone.

En particulier, l'invention peut être mise en place dans une installation de chauffage, ventilation et/ou climatisation à double nappes, où la première nappe correspond à un mélange d'air extérieur et d'air recyclé et la deuxième nappe correspond à un flux d'air recyclé exclusivement.

Bien que dans le mode de réalisation illustré les tronçons de conduit de distribution soient accolés les uns aux autres, et chacun réalisé en associant un segment de volet plan et un élément complémentaire en U, l'agencement des tronçons de conduit 15 peut être obtenu par des configurations très variées. A titre d'exemples non limitatifs, les tronçons de conduit 15 peuvent être réalisés en associant deux plaques planes fixées l'une à l'autre en étant espacées l'une de l'autre, les parois latérales des tronçons de conduit étant alors formées par les parois latérales du boitier; les tronçons de conduit 15 peuvent également être réalisés en accolant des éléments tubulaires portés par un axe s'étendant perpendiculairement aux éléments tubulaires, ou selon un autre angle si la configuration générale de l'installation le rend souhaitable.

Plutôt que d'être monté pour pivoter, les tronçons de conduit peuvent être portés par un tiroir.

Le conduit de sortie associé à l'ouverture de sortie 5 peut contenir un volet de distribution.

## Revendications

1. Installation de chauffage, ventilation et/ou climatisation d'un habitacle de véhicule automobile, comprenant un boitier (1) contenant un organe pulseur (2) apte à faire circuler un flux d'air dans le boitier, entre un orifice d'entrée (3) et des orifices de sortie (4,5), en passant par un conduit d'entrée d'air froid (20) et/ou un conduit d'entrée d'air chaud (22) séparés l'un de l'autre, l'installation comportant en outre des organes de distribution mobiles (8,9,10) agencés pour répartir le flux d'air entre les orifices de sortie, au moins un organe de distribution intermédiaire mobile (11) étant agencé pour former au moins un tronçon de conduit de distribution intermédiaire (15) traversant l'un des conduits d'entrée (20) et débouchant d'une part dans l'autre conduit d'entrée (22), et d'autre part dans un tronçon de conduit de sortie (23), pour au moins une position de l'organe de distribution intermédiaire (11), **caractérisée en ce que** l'organe de distribution intermédiaire (11) est apte à acheminer l'air issu d'un organe de réfrigération (6) ou de chauffage (7) directement vers un des orifices de sortie (4,5).

2. Installation selon la revendication 1, **caractérisée en ce que** l'un des organes de distribution (10) prolonge la continuité du tronçon de conduit de distribution intermédiaire (15).

3. Installation selon l'une des revendications précédentes, **caractérisée en ce que** l'organe de distribution intermédiaire (11) est agencé pour former au moins deux tronçons de conduit intermédiaires (15.1) accolés l'un à l'autre et montés pour pivoter sur un axe commun (16.1).

4. Installation selon l'une des revendications précédentes, **caractérisée en ce que** l'organe de distribution intermédiaire comporte plusieurs zones séparées par une cloison (19), et comprenant chacune au moins un tronçon de conduit de distribution intermédiaire (15) mobile de façon indépendante des tronçons de conduits intermédiaires des autres zones.

5. Installation selon l'une des revendications précédentes, **caractérisée en ce que** l'organe de distribution intermédiaire (11) est agencé pour présenter un jeu (j) avec ledit l'un des conduits d'entrée (20), et ledit l'un des conduits d'entrée comporte un organe de distribution (9) mobile entre une position dans laquelle il obture ledit l'un des conduits d'entrée, et une position dans laquelle il laisse passer de l'air dans ledit l'un des conduits d'entrée (20).

6. Installation selon l'une des revendications précédentes, **caractérisée en ce que** l'organe de distribution intermédiaire (11) est monté dans le conduit d'entrée d'air froid (20) et est mobile entre une position dans laquelle il s'étend en travers du conduit d'entrée d'air froid, et une position dans laquelle il s'étend selon une direction axiale du conduit d'entrée d'air froid.

7. Installation selon la revendication 6 **caractérisée en ce que** dans la position dans laquelle l'organe de distribution intermédiaire (11) s'étend en travers du conduit d'entrée d'air froid (20), il débouche sur une partie seulement du conduit d'air chaud (22).

8. Installation selon la revendication 6 **caractérisée en ce qu'**elle comporte un organe de réfrigération (6) monté dans un conduit de réfrigération (21) en parallèle au conduit d'entrée d'air froid (22), et un organe de distribution (8) monté mobile dans le conduit de réfrigération entre une position dans laquelle il s'étend en travers du conduit de réfrigération, et une position dans laquelle il s'étend selon une direction axiale du conduit de réfrigération.

## Patentansprüche

1. Anlage zur Heizung, Lüftung und/oder Klimatisierung eines Innenraumes eines Kraftfahrzeugs, welche ein Gehäuse (1) umfasst, das eine Gebläsevorrichtung (2) enthält, die geeignet ist, einen Luftstrom in dem Gehäuse zwischen einer Eintrittsöffnung (3) und Austrittsöffnungen (4, 5) strömen zu lassen, wobei er durch einen Kaltluft-Eintrittskanal (20) und/oder einen Heißluft-Eintrittskanal (22) strömt, die voneinander getrennt sind, wobei die Anlage außerdem bewegliche Verteilungselemente (8, 9, 10) umfasst, die dafür ausgelegt sind, den Luftstrom zwischen den Austrittsöffnungen zu verteilen, wobei wenigstens ein bewegliches Zwischenverteilungselement (11) dafür ausgelegt ist, für wenigstens eine Position des Zwischenverteilungselements (11) wenigstens einen Zwischenverteilungskanalabschnitt (15) zu bilden, der einen der Eintrittskanäle (20) durchquert und einerseits in den anderen Eintrittskanal (22) und andererseits in einen Austrittskanalabschnitt (23) mündet, **dadurch gekennzeichnet, dass** das Zwischenverteilungselement (11) geeignet ist, die von einem Kühlelement (6) oder Heizelement (7) kommende Luft direkt zu einer der Austrittsöffnungen (4, 5) zu lenken.

2. Anlage nach Anspruch 1, **dadurch gekennzeichnet, dass** eines der Verteilungselemente (10) den Verlauf des Zwischenverteilungskanalabschnitt (15) verlängert.

3. Anlage nach einem der vorhergehenden Ansprüche, **dadurch gekennzeichnet, dass** das Zwischenverteilungselement (11) dafür ausgelegt ist, wenigstens zwei Zwischenkanalabschnitte (15.1) zu bilden, die aneinandergefügt und so angebracht sind, dass sie um eine gemeinsame Achse (16.1) schwenken.

4. Anlage nach einem der vorhergehenden Ansprüche, **dadurch gekennzeichnet, dass** das Zwischenverteilungselement mehrere Bereiche aufweist, die durch eine Trennwand (19) getrennt sind und jeweils wenigstens einen Zwischenverteilungskanalabschnitt (15) umfassen, der unabhängig von den Zwischenkanalabschnitten der anderen Bereiche beweglich ist.

5. Anlage nach einem der vorhergehenden Ansprüche, **dadurch gekennzeichnet, dass** das Zwischenverteilungselement (11) dafür ausgelegt ist, ein Spiel (j) mit dem besagten einen der Eintrittskanäle (20) aufzuweisen, und der besagte eine der Eintrittskanäle ein Verteilungselement (9) aufweist, das zwischen einer Position, in welcher es den einen der Eintrittskanäle verschließt, und einer Position, in welcher es Luft in den einen der Eintrittskanäle (20) durchströmen lässt, beweglich ist.

6. Anlage nach einem der vorhergehenden Ansprüche, **dadurch gekennzeichnet, dass** das Zwischenverteilungselement (11) im Kaltluft-Eintrittskanal (20) angebracht ist und zwischen einer Position, in welcher es sich quer zum Kaltluft-Eintrittskanal erstreckt, und einer Position, in welcher es sich in einer axialen Richtung des Kaltluft-Eintrittskanals erstreckt, beweglich ist.

7. Anlage nach Anspruch 6, **dadurch gekennzeichnet, dass** in der Position, in welcher sich das Zwischenverteilungselement (11) quer zum Kaltluft-Eintrittskanal (20) erstreckt, es nur auf einem Teil des Heißluftkanals (22) mündet.

8. Anlage nach Anspruch 6, **dadurch gekennzeichnet, dass** sie ein Kühlelement (6) aufweist, das in einem Kühlkanal (21) parallel zum Kaltluft-Eintrittskanal (22) angebracht ist, und ein Verteilungselement (8), das im Kühlkanal beweglich zwischen einer Position, in welcher es sich quer zum Kühlkanal erstreckt, und einer Position, in welcher es sich in einer axialen Richtung des Kühlkanals erstreckt, angebracht ist.

## Claims

1. Installation for heating, ventilation and/or air-conditioning of a motor vehicle cabin, comprising a housing (1) containing a pulse member (2) that is able to cause a flow of air to circulate in the housing, between an inlet orifice (3) and outlet orifices (4, 5), passing through a cold air inlet duct (20) and/or a hot air inlet duct (22) separated from one another, the installation further comprising movable distribution members (8, 9, 10) that are arranged to distribute the flow of air between outlet orifices, at least one movable intermediate distribution member (11) being arranged to form at least one intermediate distribution duct segment (15) passing through one of the inlet ducts (20) and opening on one hand into the other inlet duct (22), and on the other hand into an outlet duct segment (23), for at least one position of the intermediate distribution member (11), **characterized in that** the intermediate distribution member (11) is able to convey the air coming from a refrigeration member (6) or heating member (7) directly to one of the outlet orifices (4, 5).

2. Installation according to Claim 1, **characterized in that** one of the distribution members (10) extends the continuity of the intermediate distribution duct segment (15) .

3. Installation according to either of the preceding claims, **characterized in that** the intermediate distribution member (11) is arranged to form at least two intermediate distribution duct segments (15.1) that adjoin one another and are mounted so as to pivot on a common axis (16.1).

4. Installation according to one of the preceding claims, **characterized in that** the intermediate distribution member comprises multiple zones separated by a partition (19), and each comprising at least one intermediate distribution duct segment (15) that is able to move independently of the intermediate duct segments of the other zones.

5. Installation according to one of the preceding claims, **characterized in that** the intermediate distribution member (11) is arranged to have a clearance (j) with respect to said one of the inlet ducts (20), and said one of the inlet ducts comprises a distribution member (9) that is able to move between a position in which it blocks off said one of the inlet ducts, and a position in which it allows air to pass into said one of the inlet ducts (20) .

6. Installation according to one of the preceding claims, **characterized in that** the intermediate distribution member (11) is mounted in the cold air inlet duct (20) and is able to move between a position in which it extends across the cold air inlet duct and a position in which it extends along an axial direction of the cold air inlet duct.

7. Installation according to Claim 6, **characterized in that**, in the position in which the intermediate distribution member (11) extends across the cold air inlet duct (20), it opens onto only part of the hot air duct (22) .

8. Installation according to Claim 6, **characterized in that** it comprises a refrigeration member (6) mounted in a refrigeration duct (21) in parallel with the cold air inlet duct (22), and a distribution member (8) mounted so as to be able to move in the refrigeration duct between a position in which it extends across the refrigeration duct, and a position in which it extends along an axial direction of the refrigeration duct.
